# FASCICULE DE BREVET EUROPEEN

(11) **EP 1 828 371 B1**
(45) Date de publication et mention de la délivrance du brevet: **08.10.2008**
(21) Numéro de dépôt: 05804324.1
(22) Date de dépôt: 28.11.2005
(51) Int. Cl.: C12G 3/06, C12G 1/00, B65D 6/36

(54) **CUVE A VIN AVEC DOUVES DROITES ET INTERCHANGEABLES**
WEINFASS MIT GERADEN, GEGENEINANDER AUSTAUSCHBAREN STREBEN
WINE VAT WITH STRAIGHT INTERCHANGEABLE STAVES

(30) Priorité: 07.12.2004 CH 20192004
(43) Date de publication de la demande: 05.09.2007
(73) Titulaire: Zuber, Pierre-Louis, 3960 Sierre (CH)
(72) Inventeur: Zuber, Pierre-Louis, 3960 Sierre (CH)
(86) Numéro de dépôt international: PCT/CH2005/000704
(87) Numéro de publication internationale: WO 2006/060926

(56) Documents cités:
- CH-A- 169 895
- GB-A- 1 136 469
- US-A- 2 301 519

## Description

La présente invention se rapporte à une cuve à vin avec douves droites et interchangeables et plus particulièrement à une cuve à vin constituée par une armature comportant des éléments de dilatation et des douves droites assemblées et juxtaposées entre elles.

Dans le domaine de la vinification plusieurs types de cuves sont utilisées, par exemple les cuves en acier inoxydable, en béton avec revêtement en céramique, ou les tonneaux réalisés avec des douves de chêne qui sont utilisés pour procurer un goût de chêne et de tanin au vin.

Les formes d'exécution de tonneaux ou fûts de chêne sont constituées par des douves en forme d'arc qui sont juxtaposées et maintenues par des cercles d'acier, la forme et la conception étant prévues pour résister aux très fortes pressions provoquées par le gonflement du bois utilisé.

Les tonneaux ou fûts de chêne connus présentent les inconvénients essentiels d'être très coûteux à réaliser et, pour obtenir le même goût de chêne, de n'être utilisables que pour trois ou quatre vinifications les vinifications suivantes ne permettant plus d'obtenir la même particularité de goût de fût de chêne ou de tanin. Les oenologues et encaveurs sont souvent donc dans l'obligation d'acheter de nouveaux tonneaux ce qui est très coûteux.

Une cuve à vin rectangulaire formée de douves droites maintenues entre elles par une armature est connue du document CH-A-169 895 (préambule de la revendication 1).

Les buts de la présente invention consistent donc à remédier aux inconvénients des formes d'exécutions de tonneaux ou de fûts de chêne connus.

Les buts sont atteints selon les principes de l'invention tels que définis par la revendication 1.

La cuve à vin avec douves droites et interchangeables, selon les principes de l'invention, comporte des douves droites qui sont emboîtables ou juxtaposées entre elles de manière à constituer une cuve de forme rectagulaire ou carrée. Une armature, par exemple une armature métallique, comporte des éléments rapportés entre eux d'une manière fixe pour certains éléments et déplaçables verticalement ou latéralement pour certains autres éléments sous l'action d'éléments élastiques prévus pour absorber les dilatations verticale et latérale. Les douves droites sont montées juxtaposées et emboîtables à l'intérieur de l'armature. Les douves droites sont très facilement interchageables tout en conservant la même armature de base. Les douves droites sont également réversibles, une face pouvant être utilisée pour une première vinification, l'autre face pouvant être, par un simple démontage et remontage, utilisé pour une deuxième vinification. Les douves étant droites un rabottage simple peut être effectué pour obtenir. à nouveau les mêmes caractéritiques pour obtenir un goût égal.

Les dessins annexés illustrent schématiquement et à titre d'exemple les principes de l'invention.
La figure 1 est une vue de face de la cuve à vin.
La figure 2 est une vue de côté de la cuve à vin.
La figure 3 est une vue en coupe d'un mode de fixation des douves par des coins.
La figure 4 est une vue en coupe de côté des modes d'emboîtage des douves entre elles.

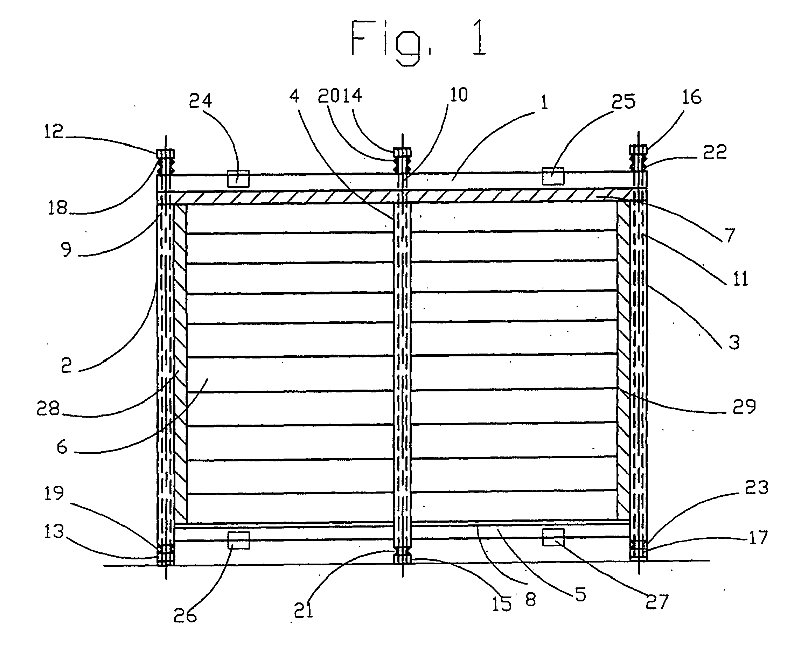

En référence tout d'abord à la figure 1 la cuve à vin est contituée d'une armature constituée par des éléments horinzontaux 1, 5, et des éléments verticaux 2, 3, 4 Des douves droites 6, 7, 28, 29 sont montées à l'intérieur de l'armature. Les douves droites peuvent être réalisées en chêne et les éléments constituant l'armature peuvent être réalisés dans des matériaux résistant au liquides, ferreux ou non ferreux, ou dans des matériaux compositites. Un fond 8 est monté dans le fond de la cuve. Le fond 8 peut être réalisé en matériaux ferreux ou non ferreux ou dans tous matériaux résistant au liquide ainsi qu'avec des douves droites.Des tiges filetée 9, 10, 11 sont montées tranversantes à l'intérieur des éléments de l'armature. Des boulons, 12,13, 14, 15, 16, 17 sont montés aux extrémités supérieure et inférieure des tiges filetées. Des rondelles élatiques , 18, 19, 20, 21, 22, 23 sont montés entre les écrous et les éléments constituant l'armature. Les rondelles élastiques permettent d'absorber les différences de dimensions dues au gonflement des douves droites en bois lorsqu'elles sont en contact avec du liquide.

Des taquets de fixation 24, 25, 26, 27 sont montés pour maintenir radialement les éléments de la cuve.

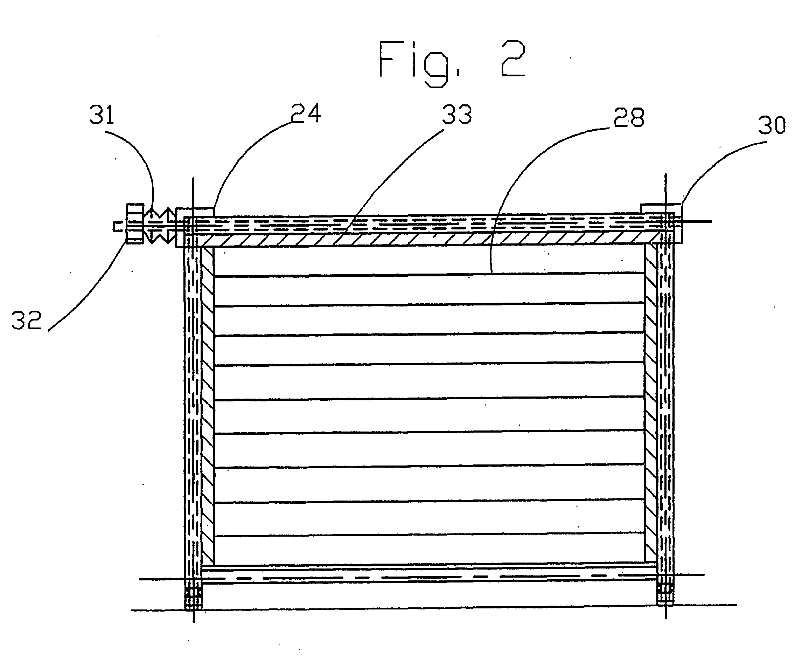

La figure 2 montre en vue de côté des douves droites 28 qui constituent les douves latérales de la cuve. Une tige filetée 33 est montée dans un élément d'armature supérieur. Un écrou 32 et des rondelles élastique 31 sont montées à une extrémité d'une tige 33 qui est reliées aux taquets 24, 30, les rondelles élastiques 31 permettant d'aborber des différence de dimensions latérales provoquées par le gonflement latéral du bois.

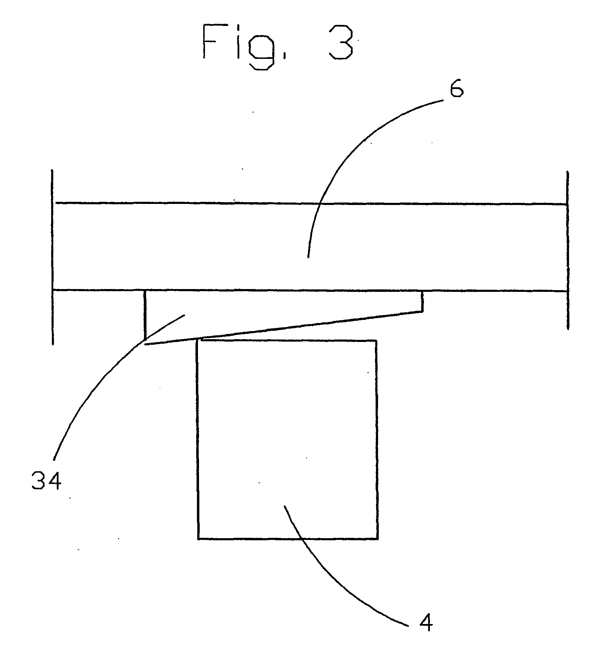

La figure 3 montre le moyen de fixation des douves droites 6 contre l'éléments de l'armature 4, par des coins 34 qui mantiennent les douves droites en position par rapport aux éléments de l'armature, ce moyen de fixation permettant d'éviter d'utiliser tout autre moyen de fixation qui pourrait nuire à la parfaite étanchéité de l'ensemble.

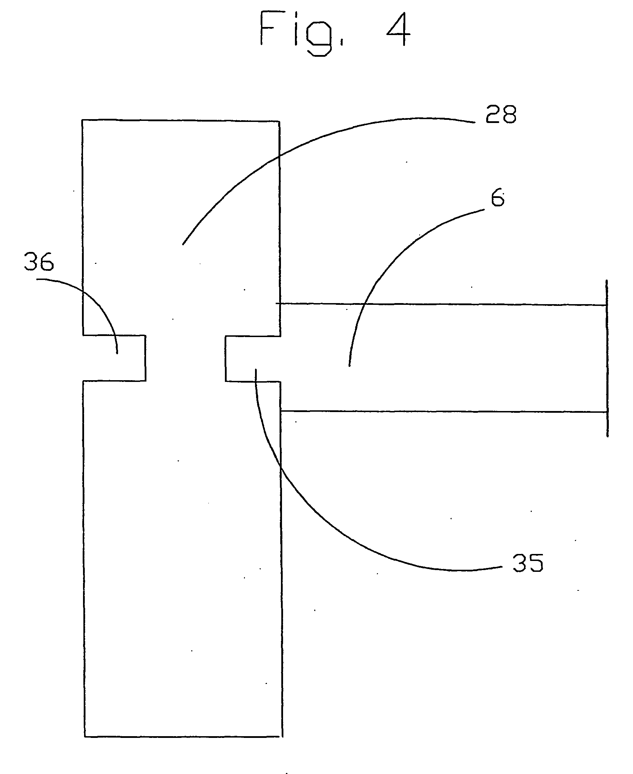

La figure 4 montre l'emboitage entre les douves longitunales 6.et latérales 28 par des nervures 35 pratiquées aux extrémités des douves longitudinales et qui coopèrent avec des rainures 36 pratiquées dans les douves latérales. Les douves latérales comportant de chaque côté deux rainures permettant un emboîtage des deux côtés lorsque les douves sont inversée.

Comme susmentionné, les douves peuvent être en chêne ou tout autre bois. Les douves étant juxtaposées et les déformations étant compensées il est possible d'envisager plusieurs types de bois pour la même cuve selon les goûts recherchés.

## Revendications

1. Cuve à vin avec douves droites et interchangeables, la cuve comportant une armature composée d'élément (1, 2, 3, 4) et des douves droites (6) qui constituent une cuve à vin rectangulaire, les douves droites étant maintenues assemblées et juxtaposées entre elles par l'armature, les éléments constituant l'armature étant traversé par des tiges filetées (9, 10, 11) qui sont maintenues par des boulons (12, 13, 14, 15, 16, 17) et qui agissent sur l'armature comme éléments de fixation, et **caractérisée en ce que** les boulons sont soumis à des rondelles élastiques qui permettent de compenser les différences de dimensions provoqués par le gonflement des douves.

2. Cuve à vin, selon la revendication 1, **caractérisée par le fait que** des coins sont disposés entre les douves et les éléments constituant l'armature de manière à maintenir fixement les douves à l'armature.

3. Cuve à vin, selon la revendication 1, **caractérisée par le fait que** les douves droites latérales comportent des rainures qui coopèrent avec des nervure pratiquées aux extrémités des douves longitudinales de manière à permettre l'emboîtage des douves entre-elles.

4. Cuve à vin, selon les revendications 1 et 3, **caractérisée par le fait que** les douves latérales comportent des rainures de manière à ce que l'emboîtage puisse s'effectuer de manière réversible.

## Claims

1. Wooden vat with straight and exchangeable staves containing an armature composed of elements (1,2,3,4) and straight staves (6) which constitute a rectangular wine vat. The straight staves are held together and juxtaposed between them by the armature, the elements constituting the armature being crossed by threaded rods (9,10,11) which are held together by bolts (12,13,14,15,16,17) and which act on the armature as binding elements and **characterised in** so far as the bolts are subjected to spring rings, which allow the compensation of the difference in dimensions provoked by the inflation of staves

2. Wooden vat according to Demand 1, **characterized by** the fact that corners are arranged between the staves and the elements constituting the armature so as to keep the staves in the armature fixed.

3. Wooden vat according to Demand 1, **characterized by** the fact that the lateral straight staves contain ridges which fit into groves built at the extremities of the longitudinal staves, so as to allow the jointing of staves between them.

4. Wooden vat according to demand 1 and 2, **characterized by** the fact that the lateral staves contain grooves so that the jointing can be made in a reversible way.

## Patentansprüche

1. Gärbehälter mit geraden austauschbaren Dauben, wobei der Behälter eine aus Einzelelementen bestehende Armierung (1, 2, 3, 4) sowie gerade Dauben (6) umfasst, die einen rechteckigen Behälter bilden. Durch die Elemente der Armierung verlaufen Gewindestäbe (9, 10, 11), die mit Bolzen (12, 13, 14, 15, 16, 17) befestigt sind und zur Fixierung der Armierung dienen, wobei die Bolzen mit elastischen Unterlegscheiben versehen sind, die dazu dienen, maßliche Schwankungen auszugleichen, die durch das Aufquellen der Dauben hervorgerufen werden.

2. Gärbehälter gemäß Anspruch 1, **gekennzeichnet dadurch, dass** Keile zwischen den Dauben und den Armierungselementen liegen, welche die Dauben sicher an der Armierung fixieren.

3. Gärbehälter gemäß Anspruch 1, **gekennzeichnet dadurch, dass** die geraden seitlichen Dauben mit Nuten versehen sind, welche in Rippen an den Enden der Längsdauben eingreifen und so die Verbindung der Dauben untereinander sicher stellen.

4. Gärbehälter gemäß Anspruch 1 und 3, **gekennzeichnet dadurch, dass** die Nuten der seitlichen Dauben so gestaltet sind, dass die Verbindung wieder gelöst werden kann.
